# FASCICULE DE BREVET EUROPEEN

(11) **EP 0 751 400 B1**
(45) Date de publication et mention de la délivrance du brevet: **21.11.2001**
(21) Numéro de dépôt: 96401376.7
(22) Date de dépôt: 21.06.1996
(51) Int. Cl.: G01S 3/786, G01B 9/025

(54) **Procédé et dispositif de traitement optique d'images bidimensionnelles permettant l'extraction du champ de vitesse**
Verfahren und Vorrichtung für die optische Behandlung von zweidimensionalen Bildern, um das Geschwindigkeitsfeld zu gewinnen
Method and device for optic treatment of two-dimensional image to extract the velocity field

(30) Priorité: 27.06.1995 FR 9507714
(43) Date de publication de la demande: 02.01.1997
(73) Titulaire: Thales, 75008 Paris (FR)
(72) Inventeur: Rajbenbach, Henri, 92402 Courbevoie Cedex (FR); Colin, Jérôme, 92402 Courbevoie Cedex (FR); Defour, Martin, 92402 Courbevoie Cedex (FR); Ferre, Thierry, 92402 Courbevoie Cedex (FR)

(56) Documents cités:
- EP-A- 0 557 007
- US-A- 4 249 207
- OPTICAL ENGINEERING, vol. 34, no. 4, Avril 1995, BELLINGHAM ,US, pages 1122-1127, XP000497480 OLIVER KRUSCHKE: "HOLOGRAPHIC INTERFEROMETRIC MICROSCOPE WITH CONJUGATE RECONSTRACTION FOR MEASUREMENT OF THREE DIMENSIONAL DISPLACEMENTS"

## Description

La présente invention concerne un procédé et un dispositif de traitement optique d'images bidimensionnelles permettant l'extraction du champ de vitesse de cibles se déplaçant à l'intérieur d'une scène complexe,

L'intérêt du champ de vitesse ainsi que l'identification d'une cible sont déterminants notamment pour prévenir des agressions et des menaces.

Il existe différentes méthodes d'extraction du champ de vitesse par exemple utilisant des moyens numériques de soustraction d'images prises d'une scène, dont l'acquisition est effectuée à deux instants voisins T et T+t, où t représente l'intervalle de temps séparant deux acquisitions successives de deux images d'une même scène. L'analyse résultant de cette soustraction permet d'extraire le champ de vitesse.

Cette technique cependant souffre d'un inconvénient majeur qui est dû à la contrainte de stabilité du capteur d'image. En effet, pour un capteur en mouvement, même lent, la soustraction d'images n'est pas exploitable à cause des artefacts engendrés par ce mouvement.

Pour pallier à cet inconvénient, d'autres méthodes numériques utilisant notamment la corrélation numérique ont été proposées. Cette dernière méthode nécessite toutefois une importante puissance de calcul, et les dispositifs existants n'autorisent pas un fonctionnement en temps réel voire avec un retard faible.

Des techniques de corrélation optique pour faire de la reconnaissance ou du suivi d'objets sont connues de l'art antérieur (voir notamment US A 4715683 et EP A 0225 205). Dans ces documents est décrite une technique de corrélation optique simple, permettant d'effectuer la corrélation entre une image à étudier, par exemple une image video d'une scène, et une image de référence. Dans EP A 0225 205, l'image de référence est une fonction de filtrage, affichée sur un modulateur spatial de lumière. Dans US A 4715683, l'image de référence est un hologramme préalablement enregistré de la scène sur un film holographique puis développé. Le dispositif décrit ne permet pas le suivi d'une cible en temps réel, puisqu'il nécessite l'enregistrement préalable d'un film holographique. En outre, les dispositifs décrits, mettant en oeuvre une corrélation optique globale entre deux images, ne sont pas adaptés à la détection de cibles dans des scènes complexes, dans lesquelles on peut être amené par exemple à chercher un détail dans une image.

La présente invention a pour but de pallier les inconvénients précités.

A cet effet, l'invention consiste en un dispositif de traitement optique d'images bidimensionnelles permettant l'extraction du champ de vitesse d'une scène complexe afin de suivre au moins une cible se déplaçant à l'intérieur de ladite scène, selon la revendication 1.

La présente invention a pour avantage de réaliser l'extraction du champ de vitesse à partir d'une scène complexe par une technique de corrélation optique multicanal, permettant un traitement temps réel, et qui est de plus adaptative.

D'autres avantages et caractéristiques de la présente invention apparaîtront plus clairement à la lecture de la description qui suit et des figures annexées qui représentent :
- la figure 1, un schéma fonctionnel du procédé selon l'invention,
- la figure 2, un dispositif selon l'invention de traitement optique d'images bidimensionnelles permettant l'extraction du champ de vitesse de cibles se déplaçant à l'intérieur d'une scène complexe,
- la figure 3, un exemple de mode de réalisation d'une plaquette de microlentillles, et
- la figure 4, un exemple de système d'exposition de plaquette de microlentillles.

La présente invention est basée sur deux opérations successives : la première consiste au découpage optique d'une image et la seconde en une corrélation numérique multicanal adaptée à l'extraction du champ de vitesse d'une scène.

Le principe général de la présente invention est le suivant :

Des images successives d'une scène sont découpées en petites images, dénommées dans la suite de la description "fenêtres", une fenêtre étant considérée par la suite comme un signal optique au même titre qu'une image. Les fenêtres sont analysées afin d'en extraire les informations utiles. Ces informations sont utilisées pour représenter un champ de vitesse à deux dimensions et pour suivre une cible se déplaçant dans une série d'images.

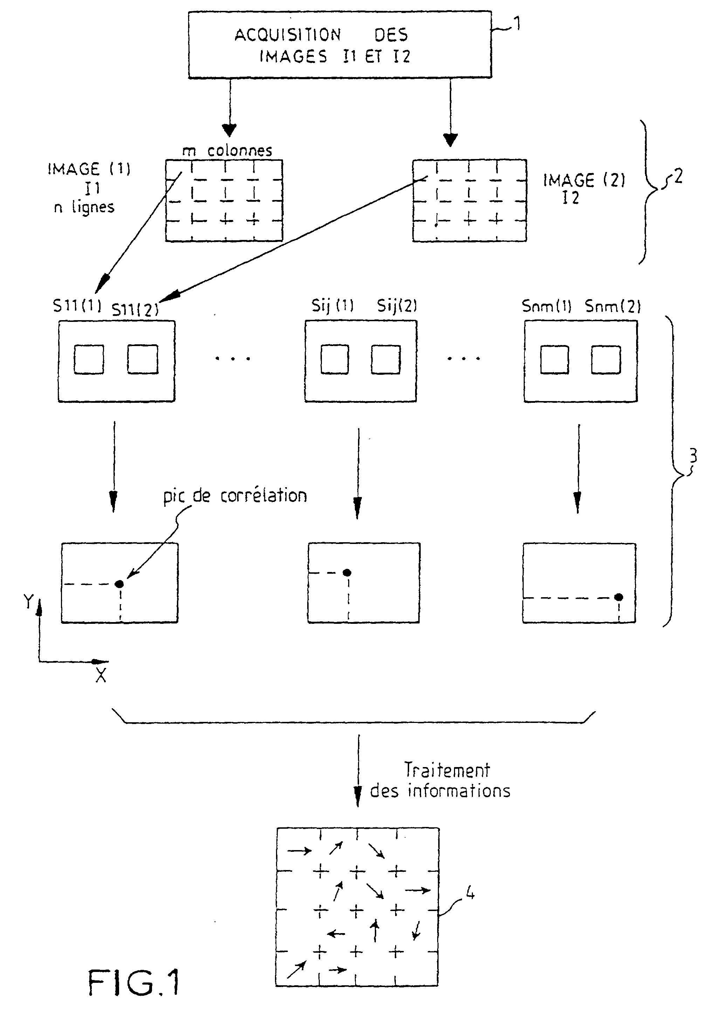

Le principe du procédé selon l'invention est illustré par le schéma fonctionnel de la figure 1.

Le procédé consiste, après acquisition 1 d'une première image I₁ et d'une deuxième image I₂ prises successivement à partir de la même scène, à découper 2 optiquement chacune des deux images I₁ et I₂ en n.m fenêtres, n et m représentant respectivement les indices lignes et colonnes des fenêtres formant ainsi une matrice de n.m fenêtres, chacune des fenêtres ainsi formées comprenant un nombre déterminé de pixels. La taille des fenêtres est déterminée en fonction du type de cible ou d'objet à détecter et/ou suivre sur la série d'image; Le procédé consiste ensuite à effectuer une corrélation 3 optique simultanée, par une méthode multicanal, entre chacune des fenêtres de la première image I₁, et son équivalent sur la deuxième image I₂.

La corrélation optique multicanal est représentée sur la figure 1 par une série d'images relatives respectivement à la corrélation de la fenêtre de la ligne 1, colonne 1 de la première image I₁ et de la fenêtre de la ligne 1 colonne 1 de la deuxième image I₂ et ainsi de suite jusqu'à la fenêtre correspondant à la ligne n, colonne m de la première image I₁ avec la fenêtre ligne n, colonne m de la deuxième image I₂. Le résultat de chaque corrélation est représenté sous la forme d'un pic de corrélation relatif à deux fenêtres de mêmes indices prises à deux instants séparés d'un intervalle de temps t déterminé.

Dans une représentation à deux dimensions X, Y, les pics de corrélation correspondent respectivement à un point plus ou moins brillant se détachant plus ou moins sur un fond sombre. La position de ce point référencé par rapport aux axes X et Y donnent accès au champ de vitesse. Une information supplémentaire tirée de l'intensité du pic de corrélation donc du point plus ou moins brillant, permet de donner une indication sur la qualité de la corrélation. Une visualisation 4 du champ de vitesse associé à chaque fenêtre est ensuite effectuée après traitement des données relatives à la position du pic de corrélation et de son intensité. Le champ de vitesse est restitué sous la forme d'un vecteur. La norme du vecteur est déterminée à partir du déplacement de l'objet entre deux images successives et permet de donner la vitesse de l'objet. La direction du vecteur donne la direction de l'objet se déplaçant dans la scène, et l'intensité du vecteur correspond comme pour le pic de corrélation, à l'indication de qualité de corrélation. Un exemple de visualisation de champ de vitesse à deux dimensions est donné sous forme d'une matrice de vecteurs.

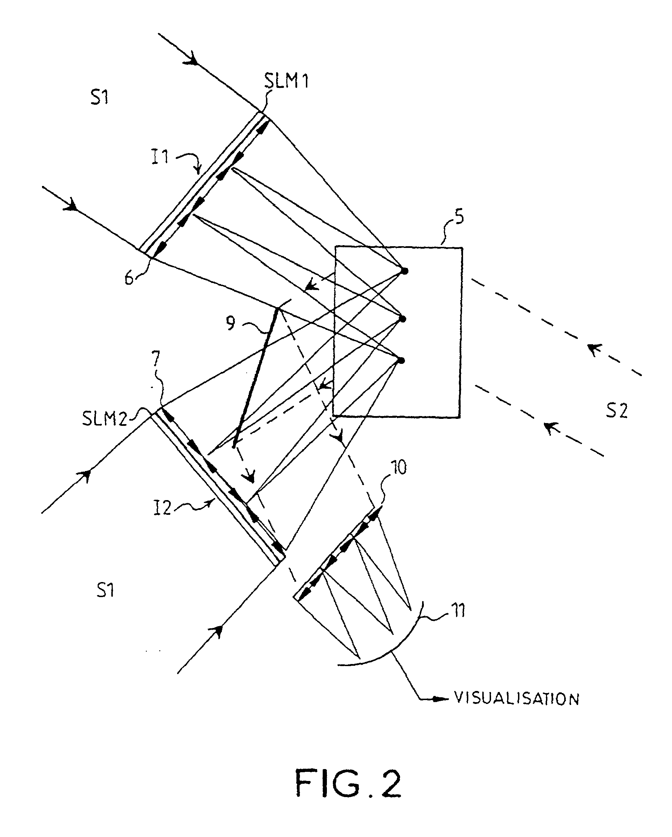

La figure 2 illustre un schéma fonctionnel d'un dispositif de traitement optique d'images bidimensionnelles selon l'invention permettant l'extraction du champ de vitesse de cibles se déplaçant à l'intérieur d'une scène complexe. Dans un mode de réalisation, une même source laser cohérente Si permet d'éclairer d'une part, un premier modulateur spatial de lumière repéré par les initiales SLM1, abréviation anglo-saxonne pour Spatial Light Modulator, recevant l'image I₁ acquise à un instant T, et d'autre part, un second modulateur spatial de lumière SLM2 recevant l'image I₂ acquise à un instant T+t. A titre d'exemple, pour une image de taille 500 x 500 ou 1000 × 1000 pixels, un imageur à cristaux liquides à adressage électrique de type matrice active peut être utilisé comme modulateur spatial. D'autres types de modulateurs peuvent être utilisés tels qu'un imageur à adressage optique utilisant une couche de matériau photoconducteur, associée à un cristal liquide.

La source laser S1 peut être réalisée à partir d'un laser à YAG: λ = 1,06 µm, ou par un microlaser à YAG doublé en fréquence, λ = 0,53 µm. Cette première source S₁ est également appelée source d'inscription ou d'enregistrement, car elle permet "d'inscrire" l'image reçue par les modulateurs SLM1 et SLM2 sur un milieu non linéaire 5 décrit ci-après.

Chacun des modulateurs spatial de lumière SLM1 et SLM2, est suivi respectivement d'un système identique de n.m (soit N) microlentilles formant ainsi une plaquette, ou matrice de microlentilles 6 et 7 disposées dans un plan parallèle aux modulateurs SLM1 et SLM2.

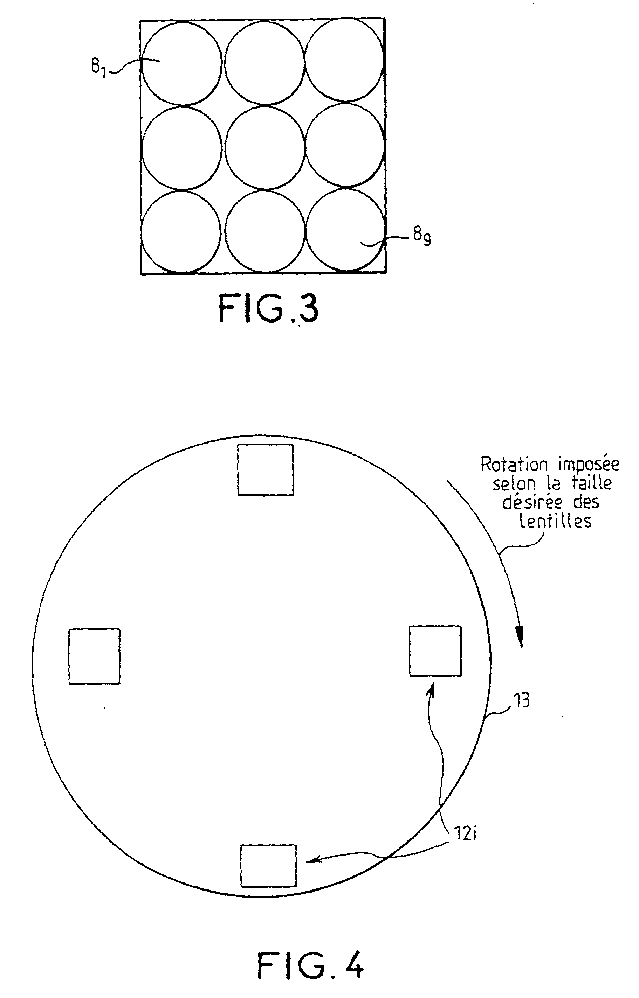

La figure 3 illustre un exemple de plaquette comportant neuf microlentilles circulaires 8₁ à 8₉. Ces matrices de microlentilles sont disposées sur la face opposée à celle éclairée par la source S1 et sont de plus disposées respectivement de manière à couvrir la totalité de chaque image. Ce sont les microlentilles 8₁ à 8₉ qui procèdent au découpage de chaque image en fenêtres. La taille de chaque fenêtre ainsi obtenue est fonction de la taille de la microlentille elle-même choisie en fonction de la taille de l'objet que l'on veut détecter.

Soient Sᵢⱼ(1) et Sᵢⱼ(2), les fenêtres respectivement obtenues par la lentille de la i-ème et de la j-ème colonne du premier modulateur SLM1 et du deuxième modulateur SLM2, les lentilles effectuent une transformation de Fourier de la fenêtre qui les traverse, et qui converge ensuite sur un milieu non linéaire 5, pour y inscrire un hologramme dynamique. Sur le milieu non linéaire 5, la convergence est adaptée de façon à ce que le faisceau issu de la fenêtre Sᵢⱼ(1) converge au même endroit que le faisceau issu des fenêtres Sᵢⱼ(2). La convergence des fenêtres Sₖₗ(1) et Sₖₗ(2) se fait au même point, mais ce point est différent de celui où les fenêtres Sᵢⱼ(1) et Sᵢⱼ(2) convergent, et ainsi de suite pour les autres fenêtres représentant une même partie d'image. Sur la figure 2, seules trois lentilles à partir desquelles trois points de convergence sont générés, sont représentées respectivement pour chaque image I₁ et I₂ par une double flèche.

Plusieurs types de milieux non linéaires à variation d'indice photoinduite peuvent être utilisés comme par exemple un milieu non linéaire à effet Kerr dans les cristaux liquides, des milieux non linéaire à absorption saturable dans les milieux gazeux, par exemple vapeur de Sodium, des milieux non linéaire à effets photoréfractifs dans des monocristaux de type GaAs, BaTiO₃, InP.

Avantageusement, le dispositif selon l'invention met en oeuvre un cristal photoréfractif comme milieu non linéaire. Ce milieu non linéaire est un cristal photoréfractif de Bi₁₂SiO₂₀. Les conditions typiques d'enregistrement des hologrammes sur ce matériau non linéaire sont les suivantes :
le champ électrique appliqué est de l'ordre de 5 à 10 kV,
la longueur d'interaction dans le cristal I est égale à 1 à 2 mm,
le pas du réseau photoinduit est de l'ordre de 20 µm, et
la densité de puissance sur le cristal p est de l'ordre de 10 mW/cm².

Le passage du faisceau de lumière issue de la première source S₁ à travers chaque microlentille permet d'obtenir les transformées de Fourier de chaque fenêtre. Soit 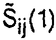 la transformée de Fourier de la fenêtre Sᵢⱼ(1), et 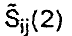 la transformée de Fourier de la fenêtre Sᵢⱼ(2), le matériau non linéaire 5 enregistre tous les signaux 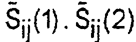 qui sont des hologrammes.

Une deuxième source laser cohérente S2, appelée également source de relecture, premet d'éclairer le milieu non linéaire 5 sous une incidence particulière connue sous le nom d' "incidence de Bragg". La source de relecture S2 est réalisée par exemple par un laser à semi-conducteur émettant dans le rouge λ = 0,670 µm. La longueur d'onde de source de relecture S2 a été choisie de préférence différente de la source d'enregistrement S1 pour éviter de dégrader l'hologrammme qui a été inscrit sur le milieu non linéaire 5 par la source S1.

Les hologrammes ainsi formés engendrent des faisceaux de diffraction en accord avec le phénomène de diffraction de Bragg. Ces faisceaux de diffraction sont réfléchis par un dispositif optique 9 qui est transparent pour les faisceaux issus des modulateurs spatiaux de lumière, SLM1 et SLM2. Les faisceaux de diffraction réfléchis traversent une troisième matrice de microlentilles 10, semblable aux deux premières 6 et 7, qui effectue la transformée de Fourier inverse des faisceaux réfléchis par le dispositif optique 9. Un détecteur optique Il est disposé de façon à récupérer les faisceaux réfléchis qui, après avoir traversé la troisième matrice de microlentilles 10, sont composés respectivement de tous les produits de corrélation des fenêtres : Sᵢⱼ(1)⊗Sᵢⱼ(2). Le dispositif optique 9 utilisé pour la récupération des faisceaux de diffraction peut être une lame dichroïque travaillant avec deux faisceaux de longueurs d'onde différentes, ou une lame semi-réfléchissante suivie d'un polariseur. Dans les deux cas, il faut veiller à ce que la réflexion ne s'opère que dans le spectre de la source de relecture S2. Le détecteur il utilisé peut être une caméra CCD, un photodétecteur ou un photomultiplicateur à galettes de microcanaux.

Concernant le choix des puissances respectives des sources d'inscription S1 et de relecture S2, il convient de choisir comme puissance d'émission laser de la source S2 une puissance inférieure à celle de la source d'enregistrement S1 pour éviter de dégrader l'hologramme qui a été inscrit sur le milieu non linéaire 5 par la source S1. Typiquement, la puissance de la source S1 est choisie égale à 80 mW et la puissance de la source S2 est choisie de quelques mW.

La présente invention n'est pas limitée au mode précis de réalisation de la figure 2.

Par exemple, d'autres systèmes optiques peuvent être utilisés pour faire converger les signaux vers le milieu non linéaire 5. Ainsi pour remplacer la plaquette de microlentilles 6, 7 et 10, l'emploi d'une lentille à focale variable peut être envisagé. Dans cette application, le mode de découpage en deux dimensions ne peut plus être conservé car il compliquerait trop les lentilles, par contre ceci peut être réalisé en faisant défiler devant les lentilles des rangées de fenêtres issues des images. Une autre variante concerne la projection des pics de corrélation qui au lieu d'être projetés verticalement sur le matériau non linéaire 5 sont projetés horizontalement, ceci étant possible en arrangeant le système optique de façon à ce que les pics de corrélation se suivent horizontalement.

Une autre variante concerne les plaquettes de microlentilles 6, 7 et 10 servant au découpage des images. Ces plaquettes peuvent être modifiées de manière à permettre un choix du nombre et de la dimension des microlentilles 8₁ à 8₉. Ceci permettant par exemple d'adapter les longueurs d'onde spatiales aux dimensions du dispositif selon l'invention.

La figure 4 illustre un système d'exposition de différentes plaquettes de microlentilles 12i. Chaque plaquette est disposée sur un support 13 mis en rotation de manière à amener la bonne plaquette de microlentilles devant les modulateurs spatiaux de lumière. Il est à noter qu'un tel système peut être monté derrière chacun des modulateurs SLM1 et SLM2, ainsi que devant le détecteur il de sortie du dispositif selon l'invention.

En utilisant un montage tel qu'illustré à la figure 4, les systèmes de lentilles 12i peuvent être présentés de façon différente devant chaque modulateur SLM1 et SLM2, ceci étant particulièrement utile par exemple pour chercher un détail dans une grande image.

Enfin, il peut être envisageable de n'utiliser qu'un seul dispositif émetteur laser pour réaliser à la fois la source S1 et la source S2. Dans ce cas, pour conserver la propriété dynamique du milieu non linéaire, il faudra respecter les niveaux de puissances à appliquer respectivement pour l'inscription et la relecture.

## Revendications

1. Dispositif de traitement optique d'images bidimensionnelles permettant l'extraction du champ de vitesse d'une scène complexe afin de détecter et/ou de suivre au moins une cible se déplaçant à l'intérieur de ladite scène, comprenant des moyens pour acquérir optiquement au moins une première image (I₁) et une deuxième image (I₂) prises successivement à partir de la même scène, des moyens de visualisation et **caractérisé en ce qu'**il comporte en outre:
- des moyens pour découper optiquement la première image (I₁) et la deuxième image (I₂) en fenêtres de taille déterminée en fonction de la taille de la cible pour former respectivement sur la première image (I₁) et la deuxième image (I₂) une matrice de fenêtres, chaque fenêtre représentant respectivement la même partie d'image,
- des moyens pour corréler optiquement simultanément, par une méthode multicanal, les fenêtres respectives à la même partie d'image de la première image (I₁) et de la deuxième image (I₂), pour obtenir pour chacune desdites fenêtres un pic de corrélation dont la position rapportée à un référentiel à deux dimensions permet d'extraire un vecteur associé à ladite fenêtre, la direction et la nonne dudit vecteur indiquant, lorsque la cible est présente dans ladite fenêtre, respectivement la direction de déplacement et la vitesse de ladite cible,
et **caractérisé en ce que** les moyens de visualisation permettent de visualiser le champ de vitesse associé à ladite scène et constitué de la matrice desdits vecteurs associés auxdites fenêtres, permettant de suivre la ou les cible(s) se déplaçant dans une suite d'images de la scène.

2. Dispositif selon la revendication 1, **caractérisé en ce que** les moyens d'acquisition optique des images (I₁ et I₂) comportent une première source laser cohérente (S1), dite source d'inscription, permettant d'éclairer d'une part un premier modulateur spatial de lumière (SLM1) recevant la première image (I₁), et d'autre part, un deuxième modulateur spatial de lumière (SLM2) recevant la deuxième image (I₂).

3. Dispositif selon l'une des revendications 1 ou 2, **caractérisé en ce que** les moyens de découpage optique des images comportent pour chaque image (I₁, I₂) une matrice (6,7) de microlentilles optiques, chaque microlentille opérant un découpage optique de l'image (I₁ et I₂) pour former une fenêtre dans l'image dont la taille est fonction de la taille de la microlentille.

4. Dispositif selon les revendications 2 et 3, **caractérisé en ce que** les matrices de microlentilles (6,7) sont disposées respectivement sur la face opposée à la face éclairée par la source (S1), du premier et du deuxième modulateur spatial (SLM1 et SLM2) et de manière à recouvrir la totalité de l'image reçue par les modulateurs (SLM1 et SLM2).

5. Dispositif selon l'une des revendications 1 à 4, **caractérisé en ce que** les moyens de corrélation comportent :
- un milieu non linéaire (5) vers lequel convergent les transformées de Fourier de chaque fenêtre, obtenues après leur passage au travers de systèmes optiques convergents (6,7), pour y inscrire un hologramme dynamique, la convergence des fenêtres relatives à la même partie des deux images (I₁ et I₂) étant faite en un même point déterminé du milieu non linéaire (5), tous les points de convergence sur le milieu non linéaire (5) étant différents,
- une source (S2) laser cohérente, dite source de relecture, éclairant le matériau non linéaire (5) sous incidence de Bragg pour engendrer des diffractions de Bragg,
- un dispositif optique (9) réfléchissant pour les diffractions de Bragg et transparent pour les fenêtres,
- des systèmes optiques convergents (10) recevant les diffractions de Bragg et réalisant la transformée de Fourier inverse de ces diffractions, disposés entre le dispositif optique (9) et un détecteur (11) délivrant un signal formé de tous les produits de corrélation des transformées de Fourier inverses des diffractions.

6. Dispositif selon les revendications 3 et 5 ou 4 et 5, **caractérisé en ce que** les systèmes optiques convergents recevant les diffractions de Bragg et réalisant la transformée de Fourier inverse de ces diffractions sont formés d'une matrice de microlentille (10) semblable à celles (6, 7) utilisées pour le découpage optique des images (I₁, I₂).

7. Dispositif selon la revendication 6, **caractérisé en ce que** les matrices de microlentilles (6,7 et 10) sont disposées respectivement sur un support (13) contenant d'autres matrices (12i) de microlentilles différentes, et qui mis en rotation permet l'exposition d'une nouvelle matrice de microlentilles (12i).

8. Dispositif selon les revendications 2 et 5 ou 2 et 6 ou 2 et 7, **caractérisé en ce que** la source laser de relecture (S₂) est de puissance inférieure à la source laser d'inscription (S₁).

9. Dispostif selon la revendication 8, **caractérisé en ce que** les sources laser d'inscription et de relecture (S1 et S2) sont réalisées à partir d'un même dispositif émetteur laser.

10. Dispositif selon l'une quelconque des revendications 5 à 8, **caractérisé en ce que** le milieu non linéaire (5) est un cristal photoréfractif de Bi₁₂SiO₂₀.

## Claims

1. Device for the optical processing of two-dimensional images allowing the velocity field of a complex scene to be extracted so as to detect and/or track at least one target moving within the said scene, comprising means for optically acquiring at least a first image (I₁) and a second image (I₂), taken in succession from the same scene, display means and
**characterized in that** it furthermore includes:
- means for optically cutting up the first image (I₁) and the second image (I₂) into windows of predetermined size depending on the size of the target in order to form, on the first image (I₁) and the second image (I₂) respectively, a matrix of windows, each window representing the same image portion respectively,
- means for optically correlating, simultaneously by a multichannel method, the respective windows with the same image portion of the first image (I₁) and of the second image (I₂) in order to obtain, for each of the said windows, a correlation peak whose position with respect to a reference frame in two dimensions makes it possible to extract a vector associated with the said window, the direction and the norm of the said vector indicating, when the target lies within the said window, the direction of movement and the velocity of the said target, respectively,
and **characterized in that** the display means make it possible to display the velocity field which is associated with the said scene and consists of the matrix of the said vectors associated with the said windows, making it possible to track the moving target or targets in a series of images of the scene.

2. Device according to Claim 1, **characterized in that** the means for optically acquiring the images (I₁ and I₂) comprise a first coherent laser source (S1), called the write source, making it possible to illuminate, on the one hand, a first spatial light modulator (SLM1) receiving the first image (I₁) and, on the other hand, a second spatial light modulator (SLM 2) receiving the second image (I₂).

3. Device according to either of Claims 1 and 2, **characterized in that** the means for optically cutting up the images comprise, for each image (I₁, I₂), a matrix (6, 7) of optical microlenses, each microlens optically cutting up the image (I₁ and I₂) in order to form, in the image, a window whose size depends on the size of the microlens.

4. Device according to Claim 2 and 3, **characterized in that** the matrices of microlenses (6, 7) are placed on the opposite face to the face illuminated by the source (S1) of the first and of the second spatial modulator (SLM1 and SLM2), respectively and so as to cover the entire image received by the modulators (SLM1 and SLM2).

5. Device according to one of Claims 1 to 4, **characterized in that** the correlation means comprise:
- a non-linear medium (5) on which the Fourier transforms of each window, obtained after they have passed through the convergent optical systems (6, 7), converge in order to write a dynamic hologram therein, the convergence of the windows relative to the same portion of the two images (I₁ and I₂) taking place at the same defined point in the non-linear medium (5), all the points of convergence on the non-linear medium (5) being different,
- a coherent laser source (S2), called the reread source, illuminating the non-linear material (5) at Bragg incidence in order to generate Bragg diffractions,
- an optical device (9) which is reflecting in respect of the Bragg diffractions and transparent in respect of the windows and
- convergent optical systems (10) which receive the Bragg diffractions and construct the inverse Fourier transform of these diffractions, the said convergent optical systems being placed between the optical device (9) and a detector (11) which delivers a signal formed from all the correlation products of the inverse Fourier transforms of the diffractions.

6. Device according to Claims 3 and 5 or 4 and 5, **characterized in that** the convergent optical systems receiving the Bragg diffractions and constructing the inverse Fourier transform of these diffractions are formed from a matrix of microlenses (10) similar to those (6, 7) used for optically cutting up the images (I₁, I₂).

7. Device according to Claim 6, **characterized in that** the matrices of microlenses (6, 7 and 10) are placed, respectively, on a support (13) which contains other matrices (12i) of different microlenses and which, when rotated, makes it possible to expose a new matrix of microlenses (12i).

8. Device according to Claims 2 and 5 or 2 and 6 or 2 and 7, **characterized in that** the reread laser source (S2) has a lower power than the write laser source (S1).

9. Device according to Claim 8, **characterized in that** the write and reread laser sources (S1 and S2) are produced from the same laser-emitting device.

10. Device according to any one of Claims 5 to 8, **characterized in that** the non-linear medium (5) is a photorefracted crystal of Bi₁₂SiO₂₀.

## Patentansprüche

1. Vorrichtung zur optischen Verarbeitung zweidimensionaler Bilder, die die Erfassung des Geschwindigkeitsfelds einer komplexen Szene erlaubt, um mindestens ein Ziel zu erfassen und/oder zu verfolgen, das sich in dieser Szene bewegt, mit Mitteln, um optisch mindestens ein erstes Bild (I1) und ein zweites Bild (I2) aufzuzeichnen, die nacheinander von derselben Szene aufgenommen wurden, und mit Anzeigemitteln,
**dadurch gekennzeichnet, daß** sie außerdem aufweist
- Mittel zur optischen Zerlegung des ersten Bilds (I1) und des zweiten Bilds (I2) in Fenster einer Größe, die abhängig von der Größe des Ziels bestimmt wird, um auf dem ersten Bild (I1) und dem zweiten Bild (I2) eine Matrix von Fenstern zu bilden, wobei jedes Fenster jeweils den gleichen Teilbereich des Bildes darstellt,
- Mittel zur gleichzeitigen optischen Korrelation der jeweiligen Fenster des gleichen Teilbereichs auf dem ersten Bild (I1) und dem zweiten Bild (I2) durch eine Mehrkanalmethode, um für jedes der Fenster einen Korrelationspunkt zu erhalten, dessen Lage bezüglich eines zweidimensionalen Bezugssystems einen dem Fenster zugeordneten Vektor zu extrahieren erlaubt, dessen Richtung und Länge, wenn das Ziel sich in dem Fenster befindet, die Richtung der Bewegung und die Geschwindigkeit des Ziels angibt,
und **dadurch gekennzeichnet, daß** die Anzeigemittel das Geschwindigkeitsfeld der Szene, bestehend aus der Matrix der den Fenstern zugeordneten Vektoren, anzuzeigen erlauben, sodaß das oder die sich bewegenden Ziele in einer Bildfolge der Szene verfolgt werden können.

2. Vorrichtung nach Anspruch 1, **dadurch gekennzeichnet, daß** die optischen Erfassungsmittel der Bilder (I1, I2) eine erste kohärente Laserquelle (S1), auch Aufzeichnungsquelle genannt, aufweisen, die einerseits einen ersten räumlichen Lichtmodulator (SLM1), der das erste Bild empfängt, und andrerseits einen zweiten räumlichen Lichtmodulator (SLM2) beleuchtet, der das zweite Bild (I2) empfängt.

3. Vorrichtung nach einem der Ansprüche 1 und 2,
**dadurch gekennzeichnet, daß** die Mittel zur optischen Zerlegung der Bilder für jedes Bild (I1, I2) eine Matrix von optischen Mikrolinsen aufweisen, wobei jede Mikrolinse eine optische Zerlegung des Bilds (I1 und I2) durchführt, um ein Fenster im Bild zu erstellen, dessen Größe von der Größe der Mikrolinse abhängt.

4. Vorrichtung nach den Ansprüchen 2 und 3, **dadurch gekennzeichnet, daß** die Matrizen von Mikrolinsen (6, 7) auf der der von der Quelle (S1) beleuchteten Seite entgegengesetzten Seite des ersten und des zweiten räumlichen Modulators (SLM1 und SLM2) so angeordnet sind, daß sie das gesamte von den Modulatoren (SLM1 und SLM2) empfangene Bild abdecken.

5. Vorrichtung nach einem der Ansprüche 1 bis 4,
**dadurch gekennzeichnet, daß** die Korrelationsmittel aufweisen
- ein nichtlineares Milieu (5), zu dem die Fourier-Transformierten jedes Fensters hin konvergieren, die nach Durchlauf durch optische Konvergenzsysteme (6, 7) erhalten werden, um dort ein dynamisches Hologramm aufzuzeichnen, wobei die Konvergenz der Fenster bezüglich des gleichen Teilbereichs der beiden Bilder (I1, I2) in einem gleichen bestimmten Punkt des nichtlinearen Milieus (5) erhalten wird und alle Konvergenzpunkte in dem nichtlinearen Milieu (5) unterschiedlich sind;
- eine kohärente Laserquelle (S2), auch Lesequelle genannt, die das nichtlineare Material unter dem Bragg'schen Einfallswinkel beleuchtet, um Bragg'sche Brechungen zu erzeugen;
- eine optische Vorrichtung (9), die die Bragg'schen Brechungen reflektiert und für die Fenster durchlässig ist,
- optische Konvergenzsysteme (10), die die Bragg'schen Brechungen empfangen und die inverse Fourier-Transformierte dieser Brechungen erzeugen, wobei diese Systeme zwischen der optischen Vorrichtung (9) und einem Detektor (11) angeordnet sind, der ein Signal liefert, das von allen Korrelationsprodukten der inversen Fourier-Transformierten der Brechungen gebildet wird.

6. Vorrichtung nach den Ansprüchen 3 und 5 oder 4 und 5, **dadurch gekennzeichnet, daß** die optischen Konvergenzsysteme, die die Bragg'schen Brechungen empfangen und die inverse Fourier-Transformierte dieser Brechungen bilden, aus einer Matrix von Mikrolinsen (10) bestehen, die den Matrizen (6, 7) gleicht, die für die optische Zerlegung der Bilder (I1, I2) verwendet werden.

7. Vorrichtung nach Anspruch 6, **dadurch gekennzeichnet, daß** die Matrizen von Mikrolinsen (6, 7, 10) jeweils auf einem Träger (13) angeordnet sind, der weitere Matrizen von unterschiedlichen Mikrolinsen enthält und der bei einer Drehung eine neue Matrix von Mikrolinsen (12i) in den Strahlverlauf bringt.

8. Vorrichtung nach den Ansprüchen 2 und 5 oder 2 und 6 oder 2 und 7, **dadurch gekennzeichnet, daß** die Laserquelle zum Lesen (S2) eine geringere Leistung als die Aufzeichnungs-Laserquelle (S1) besitzt.

9. Vorrichtung nach Anspruch 8, **dadurch gekennzeichnet, daß** die Aufzeichnungs- und die Leselaserquellen (S1, S2) von einer gemeinsamen Laser-Emittervorrichtung gebildet werden.

10. Vorrichtung nach einem beliebigen der Ansprüche 5 bis 8, **dadurch gekennzeichnet, daß** das nichtlineare Milieu (5) ein photorefraktiver Kristall aus Bi₁₂SiO₂₀ ist.
